# EUROPÄISCHE PATENTANMELDUNG

(11) **EP 4 194 986 A1**
(43) Veröffentlichungstag der Anmeldung: **14.06.2023**
(21) Anmeldenummer: 21213246.8
(22) Anmeldetag: 08.12.2021
(51) Int. Cl.: G05D 1/02

(54) **VERFAHREN ZUM BETREIBEN EINES FAHRERLOSEN TRANSPORTSYSTEMS, BEREITSTELLUNGSEINRICHTUNG UND TRANSPORTSYSTEM**

(71) Anmelder: IMS Gear SE & Co. KGaA, 78166 Donaueschingen (DE)
(72) Erfinder: WERSCHLER, Marco, 78315 Radolfzell (DE); HWANG, Steve, Carlsbad, CA 92009 (US)
(74) Vertreter: Westphal, Mussgnug & Partner Patentanwälte mbB

(57) **Zusammenfassung**

Die vorliegende Erfindung betrifft ein Verfahren zum Betreiben eines fahrerlosen Transportsystems (1) mit einer Mehrzahl von batteriebetriebenen und fahrerlosen Fahrzeugen (3) zum Transportieren von Transportgut (6) auf einem befahrbaren Logistikbereich (10) mit einer Bereitstellungseinrichtung (2), wobei die Bereitstellungseinrichtung (2) mindestens eine mindestens ein Fahrzeug (3) aufnehmende Aufnahme (20) aufweist, die in mindestens einer vertikal orientierten Ebene in einem Lagerbereich (12) beweglich ist, aufweisend folgende Verfahrensschritte:
- Bereitstellen mindestens eines Fahrzeugs (3) durch die Aufnahme (20) in dem Logistikbereich (10);
- Positionieren des mindestens einen Fahrzeugs (3) an dem Transportgut (6);
- Ankoppeln des Transportguts (6) an das mindestens eine Fahrzeug (3) und Transprotieren des Transportguts durch das mindestens eine Fahrzeug (3) von einem ersten Ort zu einem zweiten Ort;
- Abstellen des Transportguts (6);
- Aufnehmen des mindestens einen Fahrzeugs (3) durch die Aufnahme (20) der Bereitstellungseinrichtung (2); und
Bewegen der mindestens einen Aufnahme (20) mit dem mindestens einen Fahrzeug (3).

## Beschreibung

Die vorliegende Erfindung betrifft ein Verfahren zum Betreiben eines fahrerlosen Transportsystems mit einer Vielzahl von autonom fahrenden und batteriebetriebenen Fahrzeugen mit den Merkmalen des Patentanspruchs 1 sowie eine Bereitstellungseinrichtung mit den Merkmalen des Patentanspruchs 14 und ein Transportsystem mit den Merkmalen des Patentanspruchs 22.

Fahrerlose Transportsysteme sind aus dem Stand der Technik in unterschiedlichen Ausgestaltungen vorbekannt. Gattungsgemäße fahrerlose Transportsysteme werden verbreitet in industriellen Prozessen und in der Logistik zum Transport von Transportgut verwendet. Zu diesem Zweck werden sogenannte autonom fahrende und batteriebetriebene Fahrzeuge verwendet, welche im Stand der Technik auch als "Automated Guide Vehicles", kurz "AGV", bezeichnet werden. Bei einem gattungsgemäßen fahrerlosen Transportsystem kann eine Mehrzahl von fahrerlosen und batteriebetriebenen Fahrzeugen in einem Schwarm betrieben werden und umfangreiche und zeitaufwändige Aufgaben automatisiert ausführen.

Besonders verbreitet finden gattungsgemäße fahrerlose Transportsysteme Anwendung in der Lagerhaltung bzw. in der Logistik, wo verschiedenes Transportgut, wie beispielsweise Palettenware, Halbzeuge, Werkstücke oder andere Waren von einem ersten Ort zu einem zweiten Ort transportiert werden. Dabei können beispielsweise LKWs automatisch mit kommissionierter Ware be- und entladen werden.

Ein solches fahrerloses Transportsystem wird beispielsweise in der EP 3 816 752 A1 beschrieben, wobei das Transportsystem eine Mehrzahl von autonom fahrenden und batteriebetriebenen Fahrzeugen umfasst. Die Fahrzeuge fahren zum Erledigen von Aufgaben auf einem befahrbaren Logistikbereich und können dort zum Transportieren von Transportgut an einem ersten Ort unter einem Transportgut wie Paletten, Kisten oder Boxen positioniert werden. Unter Verwendung einer Hebeeinrichtung des jeweiligen Fahrzeugs kann das Transportgut angehoben werden und zu einem zweiten Ort transportiert werden. An dem zweiten Ort kann die Hebeeinrichtung des jeweiligen Fahrzeugs das Transportgut absenken bzw. abstellen und das autonom fahrende und batteriebetriebene Fahrzeug kann die nächste Aufgabe erfüllen.

Sobald der Ladezustand der Batterie des Fahrzeugs zur Neige geht, fährt das autonom fahrende und batteriebetriebene Fahrzeug über den befahrbaren Logistikbereich zu einer Lade- oder Servicestation und verbleibt dort, bis die Batterie entweder ausreichend geladen ist oder bis die Batterie durch eine geladene Batterie ersetzt wurde. Anschließend können weitere Aufgaben erledigt werden.

Derartige fahrerlose Transportsysteme haben sich in der Vergangenheit bewährt. Zur Erfüllung zahlreicher Aufgaben wird insbesondere in der Logistik innerhalb kurzer von Zeit eine große Anzahl von Fahrzeugen benötigt, beispielsweise kommissioniertes Transportgut zusammenzustellen oder einen LKW zu beladen. Die Herausforderung dabei ist es, stets ausreichend geladene batteriebetriebene Fahrzeuge vorzuhalten und andererseits die Fahrzeuge bei Bedarf zügig bereitzustellen und nach Abschluss der Mission aufgrund hoher Flächenkosten platzsparend und zügig zu lagern.

Hier setzt die vorliegende Erfindung an.

Die vorliegende Erfindung widmet sich der Aufgabe ein in zweckmäßigerweise verbessertes Verfahren zum Betreiben eines fahrerlosen Transportsystems vorzuschlagen, das die aus dem Stand der Technik bekannten Nachteile beseitigt. Ferner soll die vorliegende Erfindung ein verbessertes fahrerloses Transportsystem mit einer Mehrzahl von autonom fahrenden und batteriebetriebenen Fahrzeugen vorschlagen.

Diese Aufgaben werden durch das Verfahren mit den Merkmalen des Patentanspruchs 1, die Bereitstellungseinrichtung mit den Merkmalen des Patentanspruchs 14 sowie die Transportvorrichtung mit den Merkmalen des Patentanspruchs 22 gelöst.

Vorteilhafte Weiterbildungen und Ausgestaltungen der vorliegenden Erfindung werden in den Unteransprüchen angegeben.

Das erfindungsgemäße Verfahren mit den Merkmalen des Patentanspruchs 1 zum Betreiben eines fahrerlosen Transportsystems mit einer Mehrzahl von batteriebetriebenen und fahrerlosen Fahrzeugen zum Transportieren von Transportgut auf einem befahrbaren Logistikbereich löst die Aufgabe dadurch, dass das Transportsystem eine Bereitstellungseinrichtung aufweist. Die Bereitstellungseinrichtung weist ferner mindestens eine mindestens ein Fahrzeug aufnehmende Aufnahme auf, die in mindestens einer vertikal orientierten Ebene in einem Lagerbereich beweglich ist. Das Verfahren zum Betreiben eines fahrerlosen Transportsystems umfasst folgende Verfahrensschritte:
- Bereitstellen mindestens eines Fahrzeugs durch die mindestens eine Aufnahme in dem Logistikbereich;
- Positionieren des mindestens einen Fahrzeugs an dem zu transportierenden Transportgut;
- Ankoppeln des Transportguts an das mindestens eine Fahrzeug und Transportieren des Transportguts durch das mindestens eine Fahrzeug von einem ersten Ort zu einem zweiten Ort;
- Abstellen des Transportguts;
- Aufnehmen des mindestens einen Fahrzeugs durch die Aufnahme der Bereitstellungseinrichtung; und
- Bewegen der mindestens einen Aufnahme mit dem mindestens einen Fahrzeug.

Die vorliegende Erfindung beruht auf der Idee, die autonom fahrenden und batteriebetriebenen Fahrzeuge mit beweglichen Aufnahmen nach Art eines vertikalen Lagersystems zu lagern. Dadurch wird die Nutzung der begrenzt vorhandenen Flächen verbessert. Bevorzugt weist die Bereitstellungseinrichtung eine Vielzahl von Aufnahmen auf. Diese können nacheinander die für eine Aufgabe benötigte Anzahl von batteriebetriebenen und fahrerlosen Fahrzeugen zum Transportieren von Transportgut vereinzelt oder in Gruppen bereitstellen bzw. ausgeben. Die Fahrzeuge können von der Bereitstellungseinrichtung zur Erledigung der Aufgaben auf dem befahrbaren Logistikbereich ausschwärmen. Die mindestens eine Aufnahme kann Erfassen, ob mindestens ein Fahrzeug aufgenommen ist. Die Bereitstellungseinrichtung kennt somit den Zustand (beispielsweise leer, teilweise besetzt oder besetzt) der jeweiligen Aufnahme. Ferner kann die Aufnahme auch den Zustand oder Ladezustand des mindestens einen Fahrzeugs erfassen, weshalb die Bereitstellungseinrichtung sowohl den Zustand der jeweiligen Aufnahme als auch den Ladezustand des jeweiligen Fahrzeug kennt.

Zum Bereitstellen kann eine bedarfsorientierte Auswahl mindestens eines Fahrzeugs aus dem Pool der Mehrzahl an Fahrzeugen der Bereitstellungseinrichtung zu Erledigung einer oder mehrerer Aufgaben getroffen werden. Die Auswahl kann beispielsweise anhand mindestens eines Entscheidungskriterium erfolgen, beispielsweise Ladezustand, Konfigurationen und/oder Eigenschaften des mindestens einen Fahrzeugs.

An dieser Stelle wird angemerkt, dass die Mehrzahl von Fahrzeugen auch Fahrzeuge mit unterschiedlichen Konfigurationen (beispielsweise Schleppfahrzeug oder Hebefahrzeug) oder Eigenschaften (beispielsweise Größe, Leistungsfähigkeit etc.) umfasst.

Der befahrbare Logistikbereich kann gemäß der vorliegenden Erfindung eine im Wesentlichen horizontal orientierte Fläche oder Ebene sein, die eine Etage eines Gebäudes, insbesondere eines Lagers, mehrere über befahrbare Rampen verbundene Etagen, eine LKW-Verladestation und/oder eine oder mehrere von der LKW-Verladestation aus befahrbare LKW-Ladeflächen umfassen. Idealisiert kann der befahrbare Logistikbereich eine horizontal orientierte Logistikebene sein.

Im einfachsten Fall kann die mindestens eine Aufnahme mindestens einen durch das mindestens eine Fahrzeug befahrbaren Stellplatz umfassen. Zum Bereitstellen des mindestens einen Fahrzeugs wird die mindestens eine Aufnahme in dem Logistikbereich positioniert und das mindestens eine Fahrzeug kann von dem Stellplatz fahren und in dem Logistikbereich ausschwärmen. Zur Aufnahme des mindestens einen Fahrzeugs durch die Bereitstellungseinrichtung kann das mindestens eine Fahrzeug zur Bereitstellungseinrichtung zurückfahren und auf den mindestens einen Stellplatz der Aufnahme fahren.

Gemäß einer Weiterbildung des erfindungsgemäßen Verfahrens ist ferner vorgesehen, dass in dem Lagerbereich eine Batterie des mindestens einen Fahrzeugs gewechselt oder geladen werden kann. Durch entsprechende Mittel kann das elektrische Laden der Batterie des mindestens einen Fahrzeugs erfolgen, wobei bevorzugt der Ladevorgang begonnen wird, sobald das mindestens eine Fahrzeug durch Aufnahme der Bereitstellungseinrichtung aufgenommen wurde.

Das elektrische Laden der Batterie des mindestens einen Fahrzeugs kann konduktiv, also mittels physischer elektrischer Kontakte, oder induktiv erfolgen, wobei das konduktive Laden aufgrund eines besseren Wirkungsgrades bevorzugt wird.

Gemäß einer Weiterbildung des Verfahrens begibt sich das mindestens eine Fahrzeug zur Aufnahme durch die Bereitstellungseinrichtung, wenn die Aufgabe, also das Transportieren des Transportgutes abgeschlossen ist, oder wenn ein Ladezustand des batteriebetriebenen Fahrzeugs unterschritten wird. Die Steuerung des Fahrzeugs oder des Systems kann auch durch künstliche Intelligenz gestützt ermitteln, wann eine erneute Beladung der Batterie notwendig ist und das mindestens eine Fahrzeug zur Bereitstellungseinrichtung führen.

Das mindestens eine Fahrzeug fährt zurück zu der Bereitstellungseinrichtung und wartet dort, bis eine Aufnahme das mindestens eine Fahrzeug aufnehmen kann.

Vorteilhaft kann es sein, wenn die mindestens eine Aufnahme entlang einer Führungseinrichtung bewegbar ist. Die mindestens eine Aufnahme wird durch die Führungseinrichtung bevorzugt zwangsgeführt.

Ferner ist gemäß einer bevorzugten Weiterbildung eine Vielzahl von Aufnahmen vorgesehen, die entlang der Führungseinrichtung bewegbar sind. Bevorzugt können die Aufnahmen gleichmäßig verteilt und bevorzugt miteinander gekoppelt angeordnet sein. Beispielsweise kann die Führungseinrichtung nach Art eines Seilzuges, Kettenzuges, Kettenmagazins oder eines Paternosteraufzugs ausgebildet sein und eine Schienenführung und/oder Zugmittelführung umfassen. Alternativ kann die Führungseinrichtung beispielsweise nach Art eines Trommelmagazins oder eines beweglichen Hochregals ausgebildet sein.

Gemäß einer bevorzugten Weiterbildung des erfindungsgemäßen Verfahrens wird die mindestens eine Aufnahme durch die Führungseinrichtung entlang einer geschlossenen Fahrstrecke geführt. Die geschlossene Fahrstrecke schneidet bevorzugt mindestens einmal den mindestens einen Logistikbereich in einem hier als Schnittpunkt bezeichneten Bereich, wobei weiter bevorzugt die geschlossene Fahrstrecke den mindestens einen Logistikbereich mindestens zweimal schneidet. In dem mindestens einen Schnittpunkt der geschlossenen Fahrstrecke mit dem mindestens einen Logistikbereich kann die Bereitstellung bzw. Ausgabe und/oder die Aufnahme des mindestens einen Fahrzeugs erfolgen. Die Bereitstellung bzw. Ausgabe erfolgt durch einen sogenannten Ausfahrtbereich und die Aufnahme durch einen sogenannten Einfahrtbereich.

Sind beispielsweise mindestens zwei Schnittpunkte vorhanden, kann ein erster Schnittpunkt als Einfahrtbereich verwendet werden und der zweite Schnittpunkt als Ausfahrtbereich. Allerdings können Ein- und Ausfahrtbereich auch in Einem vereint sein, wobei in dem Ein- und Ausfahrtbereich bevorzugt die Fahrtrichtungen des mindestens einen Fahrzeugs gleich sein sollten.

In dem Ein- und/oder Ausfahrtbereich können die Fahrzeuge bevorzugt in einer Vielzahl von Fahrtrichtungen aufgenommen werden. Beispielsweise kann die Fahrrichtung parallel zu dem Normalenvektor der vertikal orientierten Ebene orientiert sein oder parallel zu der vertikal orientierten Ebene.

Gemäß einer bevorzugten Weiterbildung erfolgt das Bewegen der mindestens einen Aufnahme durch die Führungseinrichtung in einer, bevorzugt einzigen, Bewegungsrichtung der im Kreis geschlossenen Fahrstrecke. Das mindestens eine Fahrzeug verbleibt daher zumindest solange in der Bereitstellungseinrichtung, bis die Aufnahme eine Wegstrecke zwischen dem Einfahrtbereich und dem Ausfahrtbereich zurückgelegt hat. Es kann sich daher anbieten, die Anzahl der Aufnahmen und/oder eine Länge der Fahrstrecke so zu bemessen, dass eine ausreichende Ladung der Batterie des batteriebetriebenen Fahrzeuges erfolgen kann. Allerdings kann das mindestens eine Fahrzeug die Fahrstrecke auch mehrmals hintereinander zurücklegen. Auch kann die Bewegungsrichtung geändert werden, wenn dadurch ein schnelleres Aufnehmen und/oder Bereitstellen des mindestens einen Fahrzeugs möglich ist.

Eine bevorzugte Weiterbildung des Verfahrens sieht vor, dass die Führungseinrichtung die Lage der Aufnahme vorgibt. Bevorzugt wird eine horizontale Orientierung der mindestens einen Aufnahme durch die Führungseinrichtung vorgegeben, die bevorzugt paternosterartig ausgebildet ist. Durch eine derartige Ausgestaltung der Führungseinrichtung wird sichergestellt, dass das mindestens eine Fahrzeug im Wesentlichen in einer horizontalen Orientierung beispielsweise auf dem Stellplatz in der Bereitstellungseinrichtung verbleibt und nicht ungewollt wegrollen oder -rutschen kann.

Darüber hinaus hat es sich als vorteilhaft erwiesen, wenn zum Bereitstellen des mindestens einen Fahrzeugs durch die Bereitstellungseinrichtung in dem mindestens einem befahrbaren Logistikbereich die mindestens eine Aufnahme in der Bewegungsrichtung entlang der Führungseinrichtung vorübergehend abgebremst oder angehalten wird oder die mindestens eine Aufnahme in der Bewegungsrichtung entlang der Führungseinrichtung zielgerichtet durch Abbremsen oder Anhalten gesteuert wird. Durch das vorübergehende Abbremsen oder Anhalten der mindestens einen Aufnahme kann das Bereitstellen oder das Aufnehmen des mindestens einen Fahrzeugs besonders einfach durchgeführt werden. Beispielsweise kann das mindestens eine Fahrzeug zur Aufnahme in oder auf die angehaltene Aufnahme fahren und/oder zur Bereitstellung von oder aus der Aufnahme fahren, ohne dass eine Relativbewegung zwischen der Aufnahme und dem mindestens einen Logistikbereich stattfindet. Mehrere Aufnahmen können nacheinander zum Bereitstellen einer Vielzahl von Fahrzeugen in dem mindestens einen befahrbaren Logistikbereich bewegt werden, wodurch die Vielzahl von Fahrzeugen eng getacktet ausgegeben werden kann und vice versa. Durch die Kopplung der Aufnahmen, können alle Aufnahmen vorübergehend und zeitgleich abgebremst oder angehalten werden. Bei mehreren Ein- und/oder Ausfahrten können somit zeitgleich von unterschiedlichen Aufnahmen mehrere Fahrzeuge bereitgestellt werden und/oder aufgenommen werden.

Eine Weiterbildung des Verfahrens sieht vor, dass das mindestens eine Fahrzeug an der Aufnahme durch Haltemittel gehalten bzw. arretiert wird. Bevorzugt können Haltemittel mechanische und/oder magnetische Haltemittel sein, die das mindestens eine Fahrzeug an der Aufnahme befestigen. Die Haltemittel für das mindestens eine Fahrzeug können darüber hinaus auch eine elektrische Kontaktierung für den Ladevorgang der Batterie des Fahrzeuges umfassen. Die Befestigung des mindestens einen Fahrzeugs an der Aufnahme und/oder die elektrische Kontaktierung kann bevorzugter Weise über eine Schnittstelle erfolgen, wobei die Schnittstelle bevorzugt auf einer Unterseite des Fahrzeugs angeordnet ist. Sowohl die Arretierung des mindestens einen Fahrzeugs als auch eine elektrische Kontaktierung für den Ladevorgang können somit auf einfache Weise bewerkstelligt werden.

Gemäß einer vorteilhaften Weiterbildung des Verfahrens kann vorgesehen werden, dass das mindestens eine Fahrzeug zum Ankoppeln des Transportgutes unter dem zu transportierenden Transportgut positioniert werden kann.

Darüber hinaus kann es vorteilhaft sein, dass zum Ankoppeln des Transportgutes an das mindestens eine Fahrzeug das Transportgut durch das mindestens eine Fahrzeug angehoben wird. Das Transportgut kann beispielsweise eine Europalette umfassen und das mindestens eine Fahrzeug kann in einen länglichen Freiraum zwischen zwei Bodenbretter der Europlatte einfahren. Lastaufnahmemittel des Fahrzeugs können das Transportgut anheben.

Eine bevorzugte Weiterbildung sieht vor, dass mehrere Fahrzeuge zum Transportieren mindestens eines Transportguts in einer bedarfsorientierten Formation an dem Transportgut oder unter dem Transportgut angeordnet werden. Beispielsweise können vier oder sechs Fahrzeuge in einer quaderförmigen Formation zum Transportieren einer Europalette angeordnet werden. In jedem der zwei länglichen Freiräume zwischen den drei parallelen Bodenbrettern können beispielsweise zwei oder drei Fahrzeuge, bevorzugt jeweils mit einer Hebeeinrichtung, mittig zu einem der drei Querbretter positioniert werden, wobei bevorzugt das Anheben des Transportgutes durch die Formation der Fahrzeuge im Wesentlichen synchron erfolgt und weiter bevorzugt das Bewegen des Transportgutes von dem ersten Ort zu dem zweiten Ort unter Beibehaltung der Formation erfolgt. Die Formation kann ferner eine Vielzahl von Fahrzeugen und Transportgüter umfassen. Beispielsweise kann durch eine solche Formation ein Lkw durch eine gemeinsame Formation in einer gemeinsamen Bewegung innerhalb kürzester Zeit beladen werden, wobei bevorzugt der Lkw in einer Bewegung der Formation beladen oder entladen wird. Sobald ein Lkw an der Verladestation andockt, können die Fahrzeuge von der Bereitstellungseinrichtung ausgegeben werden, ausschwärmen und die Formation zum Entladen des Transportgutes einnehmen und das Transportgut auch bevorzugt in Formation von der Ladefläche abfahren und das jeweilige Transportgut innerhalb des Logistikbereiches verteilen. Nach dem Abstellen des Transportguts können die Fahrzeuge zur Bereitstellungseinrichtung zurückschwärmen oder weitere Aufgaben, wie beispielsweise das Beladen des LKWs in analoger Weise zu dem Entladen übernehmen. Dadurch kann das Be- und Entladen besonders effizient ausgeführt werden. Die Formation kann aber auch ein unregelmäßiges Erscheinungsbild aufweisen, um beispielsweise eine ungleichmäßige Belastung durch das Transportgut zu handhaben.

Ferner hat es sich als vorteilhaft erwiesen, wenn der Lagerbereich mindestens einen Stellplatz umfasst, auf dem mindestens ein Fahrzeug angeordnet werden kann. Der Stellplatz ist gemäß einer bevorzugten Weiterbildung vertikal zu dem Logistikbereich beabstandet angeordnet, wobei noch weiter bevorzugt das mindestens eine Fahrzeug von der Aufnahme an den Stellplatz übergeben werden kann. Der Stellplatz kann gemäß einer bevorzugten Weise die Mittel zum Laden der Batterie aufweisen. Ferner kann der mindestens eine Stellplatz auch ein gezieltes Ausschleusen bestimmter Fahrzeuge ermöglichen, beispielsweise zum Durchführen von Wartungs- und/oder Reparaturarbeiten. Auf dem mindestens einen Stellplatz können auch Ersatz-Fahrzeuge bereitgestellt werden, um bei Ausfällen von Fahrzeugen oder einem erhöhten Bedarf ausreichend Fahrzeuge bereitstellen zu können.

Ein weiterer Aspekt der vorliegenden Erfindung betrifft eine Bereitstellungseinrichtung, insbesondere eine Bereitstellungseinrichtung zur Durchführung des zuvor beschriebenen Verfahrens, für eine Mehrzahl von batteriebetriebenen und fahrerlosen Fahrzeugen, die in mindestens einem befahrbaren Logistikbereich durch einen Ein- und/oder Ausfahrtsbereich ausgegeben und aufgenommen werden können. Erfindungsgemäß weist die Bereitstellungseinrichtung mindestens eine mindestens ein Fahrzeug aufnehmende Aufnahme auf, wobei die mindestens eine Aufnahme in mindestens einer vertikal orientierten Ebene in einem Lagerbereich beweglich ist, und wobei die mindestens eine Aufnahme das mindestens eine Fahrzeug in dem Ein- und/oder Ausfahrtsbereich in dem mindestens einen befahrbaren Logistikbereich ausgeben kann und von dem mindestens einen befahrbaren Logistikbereich das mindestens eine Fahrzeug aufnehmen kann.

Weiterhin hat es sich als vorteilhaft erwiesen, wenn die mindestens eine Aufnahme Mittel zum Wechseln oder Laden der Batterie des mindestens einen Fahrzeugs aufweist. Durch entsprechende Mittel kann das elektrische Laden der Batterie des mindestens einen Fahrzeugs erfolgen. Der Ladevorgang kann ferner unmittelbar begonnen werden, sobald das mindestens eine Fahrzeug durch Aufnahme der Bereitstellungseinrichtung aufgenommen wird. Das elektrische Laden der Batterie des mindestens einen Fahrzeugs kann konduktiv oder induktiv erfolgen, wobei das konduktive Laden der Batterie aufgrund eines besseren Wirkungsgrades bevorzugt wird.

Ferner sieht eine Weiterbildung vor, dass eine Führungseinrichtung vorgesehen ist und dass die Führungseinrichtung die mindestens eine Aufnahme entlang einer vorgegebenen Fahrstrecke in dem Lagerbereich führt. Die Führungseinrichtung kann eine geschlossene Fahrstrecke darstellen. Die Führungseinrichtung kann bevorzugt eine Vielzahl von Aufnahmen entlang der vorgegeben Fahrstrecke nach Art einer Endloskette, bevorzugt gleichmäßig, verteilt führen. Die Führungseinrichtung kann daher nach Art eines Kettenzuges, Seilzuges, Kettenmagazins oder eines Paternosteraufzugs ausgebildet sein und eine Schienenführung und/oder Zugmittel umfassen. Die Aufnahmen können miteinander gekoppelt sein und synchron entlang der Fahrstrecke bewegt werden.

Die Führungseinrichtung kann nach Art eines modularen Bausystems ausgebildet sein, weshalb eine Bereitstellungseinrichtung nach dem Baukastensystem konfiguriert werden kann und auch zu einem späteren Zeitpunkt erweitert werden kann.

Weiterhin hat es sich als vorteilhaft erwiesen, wenn die mindestens eine Aufnahme entlang der Fahrstrecke in der Horizontalen orientiert gehalten wird. Die Orientierung der Aufnahme kann entweder durch die Führungseinrichtung erzwungen werden, oder die Aufnahmen können sich eigenständig ausrichten, in dem sie zum Beispiel nach Art einer Gondel ausgebildet sind. In einer beispielhaften Ausgestaltung der Führungseinrichtung kann diese nach Art eines Paternosteraufzuges ausgebildet sein und die Orientierung der mindestens einen Aufnahme zwangsweise vorgeben.

Eine bevorzugte Weiterbildung der vorliegenden Erfindung sieht vor, dass die mindestens eine Aufnahme Haltemittel aufweist, durch die das mindestens eine Fahrzeug an der Aufnahme befestigbar ist. Bevorzugt kann das Haltemittel ein mechanisches und/oder magnetisches Haltemittel sein, das das mindestens eine Fahrzeug an der Aufnahme befestigen kann. Die Haltemittel für das mindestens eine Fahrzeug können darüber hinaus auch eine elektrische Kontaktierung für den Ladevorgang der Batterie des Fahrzeuges umfassen. Die Befestigung des mindestens einen Fahrzeugs an der mindestens einen Aufnahme und/oder die elektrische Kontaktierung können bzw. kann bevorzugter Weise über eine Schnittstelle an dem mindestens einen Fahrzeug erfolgen, wobei die Schnittstelle bevorzugt auf einer Unterseite des mindestens einen Fahrzeugs angeordnet ist.

Darüber hinaus hat es sich als vorteilhaft erwiesen, wenn eine Aufnahme mindestens zwei Fahrzeuge aufnehmen kann. Bevorzugt können die mindestens zwei Fahrzeuge in einer Formation aufgenommen werden, wobei die Formation bevorzugt eine Reihenformation oder eine quaderförmige Formation ist. Einerseits kann durch diese Weiterbildung die Kapazität der Bereitstellungseinrichtung gesteigert werden und andererseits können zeitgleich die mindestens zwei Fahrzeuge bereitgestellt oder aufgenommen werden.

Eine Weiterbildung der Bereitstellungseinrichtung sieht vor, dass der Lagerbereich mindestens einen, vorzugsweise eine Mehrzahl von Stellplätzen, aufweist, und dass auf dem jeweiligen Stellplatz mindestens ein Fahrzeug anordnenbar ist. Ferner kann die mindestens eine Aufnahme mindestens einen Stellplatz umfassen, wodurch ein durch die Bereitstellungseinrichtung aufgenommenes Fahrzeug für die Verweildauer in der Bereitstellungseinrichtung an der jeweiligen Aufnahme zur Lagerung verbleiben kann.

Das mindestens eine Fahrzeug kann gemäß einer Weiterbildung der Bereitstellungseinrichtung in dem Ein- und/oder Ausfahrtsbereich auf die mindestens eine Aufnahme auffahren bzw. runter fahren. Hierzu wird bevorzugt die mindestens eine Aufnahme mit dem mindestens einen Logistikbereich näherungsweise in Flucht gebracht.

Nach Maßgabe einer weiteren Ausgestaltung der vorliegenden Erfindung können in dem Lagerbereich regalartig angeordnete Stellplätze vorgesehen sein. Die regalartig angeordneten Stellplätze können bevorzugt vertikal beabstandet zu dem Logistikbereich angeordnet sein. Das mindestens eine Fahrzeug kann von der mindestens einen Aufnahme auf einen der regalartig angeordneten Stellplätze fahren. Durch diese Maßgabe kann die Kapazität der Bereitstellungseinrichtung vergrößert werden.

Ein weiterer Aspekt der vorliegenden Erfindung betrifft ein Transportsystem mit einer zuvor beschriebenen Bereitstellungseinrichtung und einer Mehrzahl an fahrerlosen und batteriebetriebenen Fahrzeugen.

Nachfolgend wird unter Bezugnahme auf die begleitende Zeichnung ein Ausführungsbeispiel der vorliegenden im Detail beschrieben. Es zeigen:
- Figur 1: eine schematische Darstellung eines Transportsystems mit einer Mehrzahl von fahrerlosen und batteriebetrieben Fahrzeugen und einer Bereitstellungseinrichtung, wobei die Fahrzeuge in einem befahrbaren Logistikbereich beweglich sind, und eine Bereitstellungseinrichtung zum Lagern und Bereitstellen der Fahrzeuge,
- Figur 2: eine schematische Darstellung des Transportsystems gemäß Figur 1, wobei eine Formation von Fahrzeugen einen Lkw an einer Ladestation be- oder entlädt,
- Figur 3: eine vereinfachte perspektivische Darstellung eines Fahrzeugs des Transportsystems,
- Figur 4: eine schematische und stark vereinfachte Seitenansicht der Bereitstellungseinrichtung,
- Figur 5: eine weitere Seitenansicht der Bereitstellungseinrichtung gemäß Figur 4,
- Figur 6: eine erste Weiterbildung der Bereitstellungseinrichtung gemäß den Figuren 4 und 5, und
- Figur 7: eine zweite Weiterbildung der Bereitstellungseinrichtung

Nachfolgend werden gleiche oder funktional gleiche Bauteile mit gleichen Bezugszeichen gekennzeichnet. Der Übersichtlichkeit halber sind in den einzelnen Figuren nicht alle gleichen oder funktional gleichen Teile mit einer Bezugsziffer versehen.

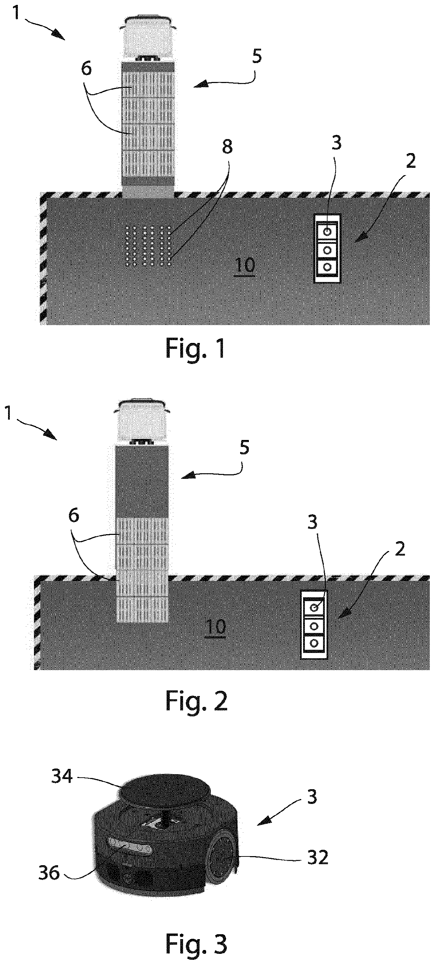

Figur 1 zeigt eine Draufsicht auf ein stark vereinfachtes und schematisiertes Transportsystem 1, welches beispielsweise in der Logistikbranche Anwendung finden kann. Das Transportsystem 1 umfasst eine Bereitstellungseinrichtung 2 für eine Mehrzahl von in Figur 3 detailliert und beispielshaft dargestellten batteriebetriebenen und fahrerlosen Fahrzeugen 3, die auf einem befahrbaren Logistikbereich 10 zum Transportieren von Transportgut 6 autonom fahren können.

Das Transportgut 6 wird in den begleitenden Figuren 1 und 2 als Europalette dargestellt, wobei das zu transportierende Transportgut beliebig ausgewählt werden kann. Beispielsweise kann das Transportgut 6 auch ein beliebiger Transportbehälter sowie weitere Gegenstände sein, wie beispielsweise ein Einkaufswagen, ein Kinderwagen, ein Krankenbett, eine Mülltonne oder dergleichen. Dabei muss nicht zwangsweise das Transportgut 6 durch das Fahrzeug 3 zum Transport angehoben werden, sondern es kann auch als Adapter oder Kupplung verwendet werden, um das Fahrzeug 3 zum Transport mit dem Fahrzeug 3 zu koppeln und das Transportgut von einem ersten Ort zu einem zweiten Ort mit mindestens einem Fahrzeug 3 zu bewegen.

Die Fahrzeuge 3 sind autonom fahrende und batteriebetriebene Fahrzeuge, welche auch als "Automated Guide Vehicles", kurz "AGV", bezeichnet werden. Die Fahrzeuge 3 können insbesondere sogenannte MM-AGV, also Mutli-Purpose-Micro Automated Guide Vehicles sein, die sich durch ihre kompakte Baugröße auszeichnen. Bevorzugt ist die Baugröße an einen Freiraum einer Europalette nach EN 13698-1 angepasst, so dass das AGV in diesen Freiraum einfahren kann. Der Freiraum zwischen den drei Bodenbrettern ist 227,5mm breit und 100mm hoch, wobei das Fahrzeug 3 diese Maße nicht überschreiten sollte, um in den Freiraum einfahren zu können.

Der Logistikbereich 10 kann im einfachsten Fall eine befahrbare und horizontal orientierte Logistikebene sein, wie beispielsweise eine Etage eines Lagers und kann eine Beladestation für LKWs 5 - wie in den Figuren 1 und 2 gezeigt - umfassen. Die Fahrzeuge 3 können ferner in dem Logistikbereich 10 auf einen Lkw 5 bzw. dessen Ladefläche zum Beladen oder Entladen des Transportgutes 6 fahren. An dieser Stelle wird angemerkt, dass der Logistikbereich 10 sich auch über mehrere Etagen oder dergleichen erschließen kann, wobei beispielsweise die Etagen oder Ebenen über Rampen verbunden sein können.

Die batteriebetriebenen und fahrerlosen Fahrzeuge 3 umfassen eine Antriebseinrichtung 32, eine Hebeeinrichtung 34 und eine nicht dargestellte Batterie, die das Fahrzeug mit elektrischem Strom versorgen kann. Die Batterie ist gemäß einer bevorzugten Ausgestaltung eine wiederaufladbare Batterie, wobei die Batterie entweder fest an dem Fahrzeug 3 angeordnet sein kann oder über ein Schnellwechselsystem getauscht werden kann.

Die Hebeeinrichtung 34 kann gemäß einer bevorzugten und in Figur 3 dargestellten Ausführung auf einer Oberseite des Fahrzeugs 3 angeordnet sein und konfiguriert sein, dass Transportgut 6 anzuheben oder abzusenken. Die Hebeeinrichtung 34 kann beweglich sein und kann weiter bevorzugt unabhängig von der Fahrrichtung des Fahrzeugs 3 das Transportgut Anheben oder absenken. Ferner kann das Fahrzeug 3 konfiguriert sein, das Transportgut auszubalancieren.

Die Koordination bzw. Steuerung des Fahrzeugs 3 bzw. der Fahrzeuge 3 des Transportsystems 1 kann über eine elektronische Kopplung, insbesondere mittels drahtloser Kommunikation, erfolgen. Sensoren 36 dienen der Steuerung des Fahrzeuges 3 und können Kollisionen verhindern.

Das Fahrzeug kann ein Gewicht des Transportguts ermitteln und beispielweise an eine Steuerung übertragen.

Darüber hinaus kann das Fahrzeug 3 eine nicht dargestellte Schnittstelle aufweisen, über die das Fahrzeug 3 zum Laden der Batterie bestromt werden kann. Die Schnittstelle kann kabelgebunden oder kabellos sein, wobei bevorzugt die Schnittstelle als kabelgebundene Schnittstelle auf der der Oberseite gegenüberliegenden Unterseite ausgebildet sein kann.

Unter Bezugnahme auf Figur 1 ist ersichtlich, dass das Transportsystem 1 eine Vielzahl von Fahrzeugen 3 umfasst, welche von einer Bereitstellungseinrichtung 2 ausschwärmen können und in einem Schwarm betrieben werden können, um beispielsweise umfangreiche und zeitaufwändige Aufgaben automatisiert auszuführen.

Zur Durchführung einer Aufgabe, beispielsweise der Transport von Transportgut 6 von einem ersten Ort zu einem zweiten Ort, können die Fahrzeuge 3 eine Formation gemäß Figur 1 einnehmen, und sich innerhalb dieser Formation bevorzugt synchron bewegen. Die Formation besteht aus mindestens zwei, vorzugsweise vier, noch weiter bevorzugt sechs, oder noch weiter bevorzugt mehr als sechs Fahrzeugen 3. In der Formation sind die Fahrzeuge 3 beispielsweise in einer Linie oder einem Quader, bevorzugt in Reihen und Spalten, also in Reih und Glied, angeordnet. Bei einer ungleichmäßigen Belastung kann die Formation auch angepasst werden.

Wie später noch im Detail beschrieben werden wird, können die Fahrzeuge 3 von der Bereitstellungseinrichtung 2 zu einem ersten Ort in beliebiger Weise ausschwärmen und können die Formation am Transportgut 6 oder unter dem Transportgut 6 einnehmen, das Transportgut 6 ankoppeln. Das Ankoppeln kann mittels der Hebeeinrichtung 34 erfolgen.

In der Formation erfolgt der Transport von einem ersten Ort zu einem zweiten Ort. An dem zweiten Ort können die Fahrzeuge 3 das Transportgut 6 abstellen. Nach dem Abstellen des Transportgutes 6 können die Fahrzeuge 3 die Formation verlassen und entweder weitere Aufgaben übernehmen oder zurück zu der Bereitstellungseinrichtung 2 fahren.

In Figur 2 wird die sogenannte "one shot"-Beladung oder Entladung eines LKWs 5 dargestellt. Bei der "one shot"-Beladung oder -Entladung werden mehrere Transportgüter 6 durch eine Vielzahl von Fahrzeugen 3 in einer Formation in einer bevorzugt synchronen oder abgestimmten Bewegung transportiert. Zur "one shot"-Beladung kann beispielsweise das Transportgut 6 in einer Formation aus 3 x 4 Europaletten im Logistikbereich 12 bereitgestellt werden. Zum Transportieren des Transportgutes werden je Europlatte in diesem Beispiel vier Fahrzeuge 3 verwendet, weshalb 48 Fahrzeuge zum "one shot"- Beladen bereitgestellt werden.

Die Bereitstellungseinrichtung 2 befindet sich innerhalb des Logistikbereichs 10 und ist in einem im Wesentlichen in einer vertikal orientierenten Ebene angeordneten Lagerbereich 12 angeordnet und ist konfiguriert, eine Mehrzahl von Fahrzeugen 3 nach Art eines vertikalen Lagersystems von dem Logistikbereich 10 über einen Einfahrtsbereich 14 aufzunehmen bzw. über einen Ausfahrtsbereich 16 bereitzustellen.

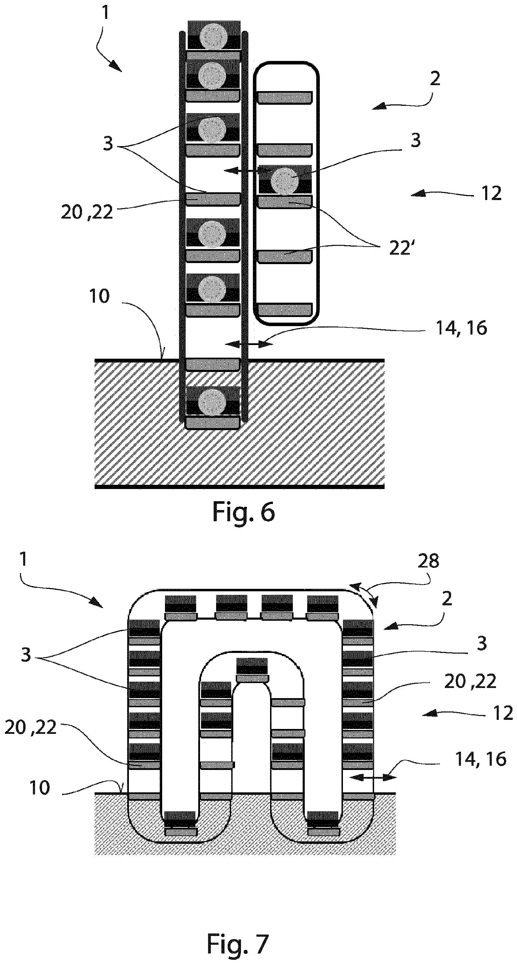

Die Bereitstellungseinrichtung 2 umfasst eine Mehrzahl von Aufnahmen 20, wobei die jeweilige Aufnahme 20 mindestens ein Fahrzeug 3 aufnehmen kann. Die Aufnahmen 20 werden durch eine Führungseinrichtung 24 entlang einer bevorzugt geschlossenen Fahrstrecke geführt. Die Fahrstrecke kann eine beliebige Form aufweisen. Beispielsweise kann zur Steigerung der Kapazität der Bereitstellungseinrichtung 2 die Fahrstrecke, wie in Figur 7 gezeigt ist, meanderförmig ausgebildet sein.

Die Führungseinrichtung 24 kann nach Art eines Modularen Bausystems ausgebildet sein. Durch das Baukastensystem kann eine Bereitstellungseinrichtung 2 einfach an die Bedürfnisse angepasst werden und ein späteres Nachrüsten oder Erweitern kann einfach realisiert werden.

Die Führungseinrichtung 24 umfasst Zug- oder Fördermittel, die eine synchrone Bewegung aller Aufnahmen 20 entlang der Führungseinrichtung 24 ermöglichen.

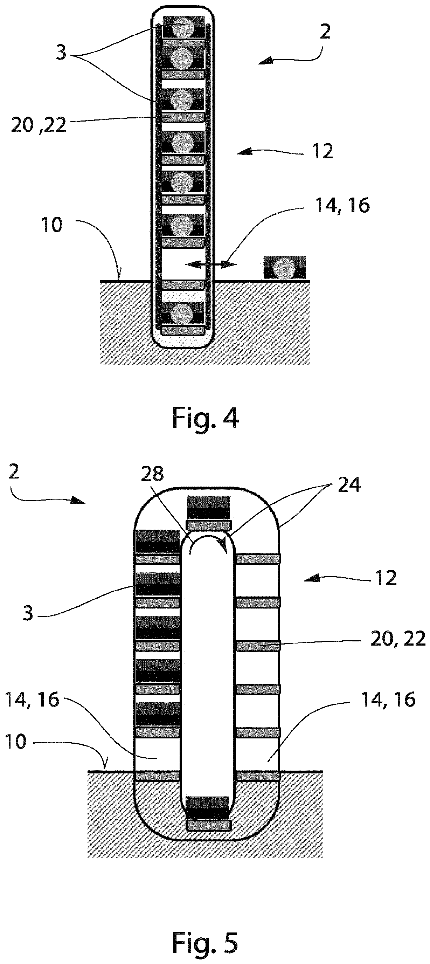

Die Zug- oder Fördermittel umfassen einen nicht dargestellten Antrieb, durch den die Aufnahmen 20 entlang der Fahrstrecke - bevorzugt in eine einzige Bewegungsrichtung 28, siehe Figur 4, - bewegt werden können. Die Bewegungsrichtung 28 kann allerdings auch geändert werden, beispielsweise um schneller mindestens ein Fahrzeug 3 bereitzustellen oder erneut aufnehmen zu können.

Die Aufnahmen 20 können kettenartig und noch weiter bevorzugt in gleichbleibenden Abständen miteinander gekoppelt sein und so immer wieder und der Reihe nach - nach Art eines Kettenmagazins - in den Einfahrtsbereich 14 und/oder in den Ausfahrtsbereich 16 bevorzugt getacktet geführt werden. Der Antrieb kann diese Bewegung vorübergehend abbremsen oder anhalten, damit das Aufnehmen oder das Bereitstellen des mindestens einen Fahrzeugs 3 erleichtert wird.

Die Aufnahmen 20 werden entlang der gesamten Fahrstrecke horizontal orientiert gehalten. Somit bleibt deren Lage in dem Raum entlang der gesamten Fahrstrecke im Wesentlichen unverändert. Die Aufnahmen 20 können hierfür gondelartig ausgebildet sein oder die Orientierung kann durch die Führungseinrichtung 24 vorgegeben werden. Eine derartig beschaffene Führungseinrichtung 24 für eine Mehrzahl von Aufnahmen ist beispielsweise aus sogenannten Paternosteraufzügen vorbekannt.

Die jeweilige Aufnahme 20 kann mindestens einen Stellplatz 22 umfassen, auf dem ein Fahrzeug 3 angeordnet bzw. geparkt werden kann. In dem Einfahrtbereich 14 kann das mindestens ein Fahrzeug 3 von dem Logistikbereich 10 von der Aufnahme 20 aufgenommen werden bzw. auf den Stellplatz 22 der Aufnahme 20 fahren. In dem Ausfahrtbereich 16 kann das mindestens eine Fahrzeug 3 von der Aufnahme 20 bereitgestellt werden bzw. von dem Stellplatz 22 der Aufnahme 20 fahren und in den Logistikbereich 10 fahren.

Die Aufnahme 20 weist nicht dargestellte Mittel zum Laden der Batterie auf. Die Mittel zum Laden der Batterie des durch die Aufnahme 20 aufgenommenen mindestens einen Fahrzeugs 3 können die Batterie des mindestens einen Fahrzeugs 3 kabelgebunden oder drahtlos laden, sobald das Fahrzeug 3 durch die Aufnahme 20 aufgenommen wurde. Ferner kann die Aufnahme 20 nicht dargestellte Mittel zum Reinigen oder Warten des Fahrzeugs 3 aufweisen. Die Mittel zum Reinigen oder Warten des Fahrzeugs 3 können beispielsweise Druckluft, Desinfektionsmittel und/oder Wasser verwenden.

Die Mittel zum Aufladen der Batterie und/oder die Mittel zum Reinigen oder Warten können an jedem Stellplatz 22 vorgesehen sein. Die Mittel können nicht dargestellte elektrische Kontakte umfassen, die mit korrespondierenden Kontakten an dem Fahrzeugs 3 auf bekannte Weise zusammenwirken können und eine elektrische Verbindung zwischen dem Stellplatz 22 und dem Fahrzeug 3 zum elektrischen Laden der Batterie des Fahrzeugs 3 herstellen.

Ferner kann die Aufnahme 20 nicht dargestellte Haltemittel aufweisen, durch die das mindestens eine Fahrzeug 3 an der Aufnahme 20 gehalten ist. Bevorzugt wird das mindestens eine Fahrzeug 3 an der Aufnahme 20 mechanisch oder magnetisch gehalten. Die Haltemittel können verhindern, dass bei einer ruckartigen Bewegung der Aufnahme 20 entlang der Führungseinrichtung 24, beispielsweise durch ein Beschleunigen oder Abbremsen der Aufnahme 20 entlang der Fahrstrecke, das Fahrzeug 3 gegenüber der Aufnahme 20 bzw. auf dem Stellplatz 22 verrutscht.

Eine Weiterbildung gemäß Figur 6 zeigt weitere Stellplätze 22', die entlang der Führungseinrichtung 24 im Lagerbereich 12 angeordnet sind. Die Stellplätze 22' sind regalartig und gegenüber den Aufnahmen 20 stationär angeordnet und mindestens ein Fahrzeug 3 kann von einer Aufnahme 20 - wie durch einen Doppelpfeil angedeutet ist - an den Stellplatz 22' übergeben werden bzw. auf den Stellplatz 22' fahren. Die Stellplätze 22' können Mittel zum Laden der Batterie aufweisen oder ein gezieltes Ausschleusen bestimmter Fahrzeuge 3 für Wartungs-, Reparatur-, präventive Wartungs- und/oder Reparaturarbeiten ermöglichen. Auf dem mindestens einen Stellplatz 22' können Fahrzeuge 3 als Ersatz bereitgestellt werden, um bei Ausfällen von Fahrzeugen 3 oder einem erhöhten Bedarf ausreichend Fahrzeuge 3 bereitstellen zu können.

Zur Bereitstellung oder zur Aufnahme mindestens eines Fahrzeugs 3 kann die Aufnahme in dem Logistikbereich 10 bzw. fluchtend zu der Logistikebene 10 angeordnet werden, und das mindestens eine Fahrzeug 3 kann - wie in Figur 4 dargestellt ist - auf die Aufnahme 20 fahren oder von der Aufnahme 20 runterfahren.

Das fahrerlose Transportsystem 1 für die Mehrzahl von batteriebetriebenen und fahrerlosen Fahrzeugen 3 kann, wie nachfolgend beschrieben wird, betrieben werden. Sobald es im Logistikbereich 10 Bedarf für Fahrzeuge 3 zum Ausführen von Aufgaben besteht, werden die Fahrzeuge 3 durch die Bereitstellungseinrichtung 2 in einem geladenen Zustand der Batterien bereitgestellt. Hierzu werden die Aufnahmen 20 der Reihe nach entlang der Führungseinrichtung 24 bewegt und nacheinander bzw. getacktet in den Einfahrts- und/oder Ausfahrtsbereich 14, 16 bewegt und dort breitgestellt. Von dem Einfahrts- und/oder Ausfahrtsbereich 14, 16 können die Fahrzeuge 3 zum Ausführen von Aufgaben zu dem ersten Ort im Logistikbereich ausschwärmen und an das Transportgut 6 ankoppeln. Es folgt der Transport zu einem zweiten Ort, wo das Transportgut 6 absetzen wird. Es können weitere Aufgaben ausgeführt werden.

Nach dem Erledigen aller Aufgaben oder sobald ein Ladezustand einer Batterie eines Fahrzeugs 3 unterschritten wird, fährt das jeweilige Fahrzeug 3 zurück zur Bereitstellungseinrichtung 2 und wird durch eine freie Aufnahme 20 aufgenommen.

Es folgt das Laden der Batterie des Fahrzeugs 3, wobei das Fahrzeug 3 solange auf der Aufnahme 20 bzw. auf dem Stellplatz 22 verbleibt, bis die Batterie ausreichend geladen ist und weitere Aufgaben ausgeführt werden sollen.

### Bezugszeichenliste

- 1: Transportsystem
- 2: Bereitstellungseinrichtung
- 3: Fahrzeug
- 5: LKW
- 6: Transportgut
- 10: Logistikebene
- 12: Ebene
- 14: Einfahrtsbereich
- 16: Ausfahrtsbereich
- 20: Aufnahme
- 22: Stellplatz
- 32: Bewegungsmittel
- 34: Hebeeinrichtung
- 36: Sensoren

## Patentansprüche

1. Verfahren zum Betreiben eines fahrerlosen Transportsystems (1) mit einer Mehrzahl von batteriebetriebenen und fahrerlosen Fahrzeugen (3) zum Transportieren von Transportgut (6) auf einem befahrbaren Logistikbereich (10) mit einer Bereitstellungseinrichtung (2), wobei die Bereitstellungseinrichtung (2) mindestens eine mindestens ein Fahrzeug (3) aufnehmende Aufnahme (20) aufweist, die in mindestens einer vertikal orientierten Ebene in einem Lagerbereich (12) beweglich ist, aufweisend folgende Verfahrensschritte:
- Bereitstellen mindestens eines Fahrzeugs (3) durch die Aufnahme (20) in dem Logistikbereich (10);
- Positionieren des mindestens einen Fahrzeugs (3) an dem Transportgut (6);
- Ankoppeln des Transportguts (6) an das mindestens eine Fahrzeug (3) und Transportieren des Transportguts durch das mindestens eine Fahrzeug (3) von einem ersten Ort zu einem zweiten Ort;
- Abstellen des Transportguts (6);
- Aufnehmen des mindestens einen Fahrzeugs (3) durch die Aufnahme (20) der Bereitstellungseinrichtung (2); und
- Bewegen der mindestens einen Aufnahme (20) mit dem mindestens einen Fahrzeug (3).

2. Verfahren nach einem der vorgenannten Ansprüche,
**dadurch gekennzeichnet, dass** das Wechseln oder Laden einer Batterie des mindestens einen Fahrzeugs (3) in dem Lagerbereich (12) erfolgt.

3. Verfahren nach einem der vorgenannten Ansprüche,
**dadurch gekennzeichnet, dass**
das mindestens eine Fahrzeug (3) zu der Bereitstellungseinrichtung (2) zurückfährt und von dieser aufgenommen wird, wenn ein Ladezustand des batteriebetriebenen Fahrzeugs (3) unterschritten ist.

4. Verfahren nach einem der vorgenannten Ansprüche,
**dadurch gekennzeichnet, dass**
die Aufnahme (20) entlang einer Führungseinrichtung (24) bewegt werden kann.

5. Verfahren nach Anspruch 4,
**dadurch gekennzeichnet, dass**
die Führungseinrichtung (24) die mindestens eine Aufnahme (20) entlang einer geschlossenen Fahrstrecke führt.

6. Verfahren nach einem der Ansprüche 4 oder 5,
**dadurch gekennzeichnet, dass**
das Bewegen der mindestens einen Aufnahme (20) entlang der Führungseinrichtung (24) in einer, bevorzugt einzigen, Bewegungsrichtung (26) erfolgt.

7. Verfahren nach einem Ansprüche 4 bis 6,
**dadurch gekennzeichnet, dass**
das Bewegen der mindestens einen Aufnahme (20) entlang der Führungseinrichtung (24) derart erfolgt, dass die Orientierung der mindestens eine Aufnahme (20) in der Horizontalen im Wesentlichen unverändert bleibt.

8. Verfahren nach einem der vorgenannten Ansprüche,
**dadurch gekennzeichnet, dass**
zum Bereitstellen des mindestens einen Fahrzeugs (3) die Aufnahme (20) vorübergehend abgebremst oder angehalten wird.

9. Verfahren nach einem der vorgenannten Ansprüche,
**dadurch gekennzeichnet, dass**
das mindestens eine Fahrzeug (3) zum Ankoppeln unter dem zu transportierendem Transportgut (6) positioniert wird.

10. Verfahren nach einem der vorgenannten Ansprüche,
**dadurch gekennzeichnet, dass**
zum Ankoppeln des Transportguts (6) an das mindestens eine Fahrzeug (3) das Transportgut (6) durch das mindestens eine Fahrzeug (3) angehoben wird.

11. Verfahren nach einem der vorgenannten Ansprüche,
**dadurch gekennzeichnet, dass**
eine Mehrzahl von Fahrzeugen (3) zum Transportieren des Transportguts (6) in einer Formation angeordnet werden.

12. Verfahren nach einem der vorgenannten Ansprüche,
**dadurch gekennzeichnet, dass**
der Lagerbereich (12) mindestens einen Stellplatz (22) umfasst, auf dem das mindestens eine Fahrzeug angeordnet werden kann.

13. Verfahren nach einem der vorgenannten Ansprüche,
**dadurch gekennzeichnet, dass**
das mindestens eine Fahrzeug (3) an der Aufnahme (20) durch Haltemittel gehalten werden kann.

14. Bereitstellungseinrichtung (2) für eine Mehrzahl von batteriebetriebenen und fahrerlosen Fahrzeugen (3), die in mindestens einem befahrbaren Logistikbereich (10) durch einen Ein- und/oder Ausfahrtsbereich (14, 16) ausgegeben und aufgenommen werden können,
wobei die Bereitstellungseinrichtung (2) mindestens eine mindestens ein Fahrzeug (3) aufnehmende Aufnahme (20) aufweist,
wobei die mindestens eine Aufnahme (20) in mindestens einer vertikal orientierten Ebene in einem Lagerbereich (12) beweglich ist, und
wobei die mindestens eine Aufnahme (20) das mindestens eine Fahrzeug (3) in dem Ein- und/oder Ausfahrtsbereich (14, 16) in dem mindestens einen befahrbaren Logistikbereich (10) ausgeben kann und von dem mindestens einen befahrbaren Logistikbereich (10) das mindestens eine Fahrzeug (3) aufnehmen kann.

15. Bereitstellungseinrichtung (2) nach Anspruch 14,
**dadurch gekennzeichnet, dass**
die mindestens eine Aufnahme (20) Mittel zum Wechseln oder Laden der Batterie des mindestens einen Fahrzeugs (3) aufweist.

16. Bereitstellungseinrichtung (2) nach Anspruch 15,
**dadurch gekennzeichnet, dass**
die Mittel zum Wechseln oder Laden der Batterie konduktiv oder induktiv sind.

17. Bereitstellungseinrichtung (2) nach einem der Ansprüche 14 bis 16,
**dadurch gekennzeichnet, dass**
eine Führungseinrichtung (24) vorgesehen ist und dass die Führungseinrichtung (24) die mindestens eine Aufnahme (20) entlang einer vorgegeben Fahrstrecke führt.

18. Bereitstellungseinrichtung (2) nach Anspruch 17,
**dadurch gekennzeichnet, dass**
die Führungseinrichtung (24) eine geschlossene Fahrstrecke darstellen.

19. Bereitstellungseinrichtung (2) nach Anspruch 17 oder 18,
**dadurch gekennzeichnet, dass**
die Führungseinrichtung (24) die mindestens eine Aufnahme (20) entlang der Fahrstrecke in der Horizontalen orientiert führt.

20. Bereitstellungseinrichtung (2) nach einem der Ansprüche 14 bis 18,
**dadurch gekennzeichnet, dass**
die mindestens eine Aufnahme (20) Haltemittel aufweist, durch die das mindestens eine Fahrzeug (3) an der Aufnahme (20) befestigbar ist.

21. Bereitstellungseinrichtung (2) nach einem der Ansprüche 14 bis 20,
**dadurch gekennzeichnet, dass**
der Lagerbereich (12) eine Mehrzahl von Stellplätzen (22) aufweist, und dass auf dem jeweiligen Stellplatz (22) mindestens ein Fahrzeug (3) anordnenbar ist.

22. Transportsystem (1) einer Bereitstellungseinrichtung (2) nach einem der Ansprüche 14 bis 21.
